# EUROPEAN PATENT SPECIFICATION

(11) **EP 2 100 921 B1**
(45) Date of publication and mention of the grant of the patent: **11.05.2011**
(21) Application number: 09003136.0
(22) Date of filing: 04.03.2009
(51) Int. Cl.: C08L 83/05, C08L 83/07, C08L 83/04

(54) **Addition curable silicone rubber composition and cured silicone rubber**
Zusatzhärtbare Silikon-Gummi-Zusammensetzung und gehärteter Silikon-Gummi
Composition d'addition de caoutchouc de silicone durcissable et caoutchouc de silicone durci

(30) Priority: 14.03.2008 JP 2008065714
(43) Date of publication of application: 16.09.2009
(73) Proprietor: Shin-Etsu Chemical Co., Ltd., Tokyo (JP)
(72) Inventor: Meguriya, Noriyuki, Annaka-shi Gunma-ken (JP)
(74) Representative: Merkle, Gebhard

(56) References cited:
- EP-A- 1 361 253
- US-A1- 2006 258 819
- US-A1- 2007 106 016
- US-B1- 6 750 279

## Description

### TECHNICAL FIELD

This invention relates to an inexpensive addition curable silicone rubber composition containing precipitated silica and having a viscosity within the predetermined range (100 to 800 Pa·s), and a cured silicone rubber produced by curing the addition curable silicone rubber composition. More specifically, this invention relates to an addition curable silicone rubber composition containing precipitated silica highly adapted for use in injection molding, which has a viscosity in the range of 100 to 800 Pa·s, and a high cure speed at high temperature, and which is capable of producing a cured product having high strength and low compression set, as well as the cured silicone rubber produced by curing the addition curable silicone rubber composition.

### BACKGROUND OF THE INVENTION

Silicone rubbers have excellent heat resistance and cold resistance, safety, electric insulation, and weatherability, and because of such favorable properties, they have been used in almost all fields in producing an automobile parts such as connector seal and spark plug boot; electric and electronic parts such as such as roll in the copying machine and packing in the microwave oven; architectural parts such as sealant; milk bottle nipples; diving gear; and the like. However, the siloxane polymer constituting the silicone rubber has very low intermolecular force, and only a rubber having an extremely insufficient strength can be produced by curing such polymer by itself. Such rubber is inadequate both in view of moldability and its use in practical application. In order to obviate such drawback, the silicone rubbers are generally used after incorporating a reinforcing silica such as fumed silica or precipitated silica.

Silicone rubbers are divided into clay-like rubbers called millable rubbers or HCR (high consistency rubbers) and liquid-type rubbers called liquid rubbers or LSR (liquid silicone rubbers). Of these two types, demand for the liquid rubbers has rapidly increased in these years since they are well adapted for use in injection molding which is capable of producing a large number of articles in short time.

However, a liquid rubber composition used for injection molding should have a certain range of viscosity to meet the performance of the injection molding machine. Curing speed and strength of the cured rubber are also important factors in selecting of the liquid rubber composition used in the injection molding. Of the reinforcing silica as described above, fumed silica has been used in the case of the liquid rubber composition used in the injection molding in view of such demands for the composition. Fumed silica, however, has the problem of extremely expensive price because of its complicated production process. On the other hand, precipitated silica which also has the reinforcing effect has been regarded inadequate for incorporation in the composition which is to be used in the mass production by high speed injection molding due to the low viscosity as well as the insufficient strength of the resulting composition. Incorporation of the precipitated silica at an increased amount and use of a longer siloxane polymer for the purpose of increasing the viscosity both resulted in the inferior compression set, namely, loss of the most important performance of the silicone rubber.

For example, JP-A 10-130507 discloses a method for producing a composition exhibiting reduced compression set by incorporating the precipitated silica at low temperature. JP-A 10-130507, however, does not particularly mention the long chain polysiloxane in the state of rubber or viscosity of the composition. JP-A 2007-217713 discloses an addition curable liquid silicone rubber composition containing fumed silica and polysiloxane in the state of raw rubber as its critical components. The precipitated silica, however, is mentioned in JP-A 2007-217713 only as an optional component. JP-A 2006-316274 discloses an addition curable liquid silicone which contains a polysiloxane having a high viscosity, namely, a long chain polysiloxane in the state of raw rubber as its critical component. In this composition, however, the filler is mentioned only as an optional component. Furthermore, the amount of vinyl group in the raw rubber like polysiloxane is limited to a particular range, and even if such polysiloxane were combined with the precipitated silica having the poor reinforcing effect, the resulting composition can not be expected to have a strength sufficient for use in the molding.

The document US 2006/258819 A1 also discloses an addition curable silicone composition comprising 3 vinyl silicones, 1 hydrogenosilicone, a filler and a catalyst. This composition is used for injection moulding.

### SUMMARY OF THE INVENTION

The present invention has been accomplished in view of the situation as described above, and an object of the present invention is to provide an addition curable silicone rubber composition prepared by using an inexpensive precipitated silica, which exhibits high viscosity and good moldability, and which is particularly suitable for use in injection molding. Another object of the present invention is to provide an addition curable silicone rubber composition which is capable of producing a cured silicone rubber having excellent strength and compression set, as well as a cured silicone rubber produced by curing such addition curable silicone rubber composition.

In order to realize the objects as described above, the inventors of the present invention carried out an intensive study, and found that, by using an alkenyl group-containing short chain organopolysiloxane which is liquid at room temperature in combination with a long chain organopolysiloxane containing at least a certain amount of an alkenyl group which is in the state like raw rubber, a highly viscous silicone rubber composition with good moldability can be produced even if precipitated silica is used for the reinforcing silica without using the expensive fumed silica; and that the cured silicone rubber obtained by using this silicone rubber composition has high strength as well as reduced compression set. The present invention has been completed on the basis of such finding.

Accordingly, the present invention provides the following addition curable silicone rubber composition and cured silicone rubber.
[1] An addition curable silicone rubber composition comprising
   (A) 50 to 97 parts by weight of an organopolysiloxane which is liquid at room temperature, wherein the organopolysiloxane contains at least two alkenyl groups bonded to silicon atom per molecule and has an average degree of polymerization of up to 1000;
   (B) 3 to 50 parts by weight of an organopolysiloxane which has at least 6 alkenyl groups bonded to silicon atom, which has an average degree of polymerization of at least 2000, and which is in the state of raw rubber at room temperature;
   (C) 0.2 to 20 parts by weight per 100 parts by weight of total of the components (A) and (B) of an organohydrogenpolysiloxane containing at least two hydrogen atoms which are bonded to silicon atom per molecule;
   (D) 10 to 40 parts by weight per 100 parts by weight of total of the components (A) and (B) of precipitated silica having a specific surface area as measured by BET method of at least 100 m²/g; and
   (E) a catalytic amount of a catalyst for addition reaction;
   said addition curable silicone rubber composition having a viscosity at 25°C at a shear speed of 10 s⁻¹ 100 to 800 Pa·s.
[2] An addition curable silicone rubber composition according the above [1] wherein, when 10% cure time at 130°C is T10 (second) and 90% cure time is T90 (second), T10 and T90 are such that:
   15 seconds ≤ T10 ≤ 60 seconds, and
   5 seconds s (T90-T10) ≤ 30 seconds.
[3] An addition curable silicone rubber composition according the above [1] or [2] wherein the organopolysiloxane (B) which is liquid at room temperature has content of the alkenyl group of 0.000015 to 0.0005 mol/g.
[4] An addition curable silicone rubber composition according to any one of the above [1] to [3] wherein the precipitated silica (D) has a DBP absorption of 100 to 250 ml per 100 g.
[5] A cured silicone rubber produced by curing the addition curable silicone rubber composition of any one of the above [1] to [4] under the condition of 100 to 220°C for 5 seconds to 30 minutes, said cured silicone rubber having a tensile strength of at least 4.0 MPa, and an elongation at break of at least 200%.

The silicone rubber composition of the present invention is a highly viscous silicone rubber composition prepared by using an inexpensive precipitated silica, and it has high moldability which is particularly adapted for use in liquid injection molding. In addition, the cured silicone rubber obtained by curing the silicone rubber composition of the present invention has favorable properties of high strength and reduced compression set.

### DETAILED DESCRIPTION OF THE INVENTION

Next, the present invention is described in detail.

The organopolysiloxane (A) used in the present invention is an organopolysiloxane which is liquid at room temperature containing at least 2, preferably 2 to 50, and most preferably 2 to 20 alkenyl groups bonded to silicon atom per molecule. The alkenyl group is preferably the one containing 2 to 8, and more preferably 2 to 6 carbon atoms, and most preferably, the alkenyl group is vinyl group.

The organopolysiloxane (A) which is liquid at room temperature (23°C±15°C, this also applies to the following description) may be the one having the following average compositional formula (I):

R¹ₐSiO_{(4-a)/2} (I)

wherein R¹ is independently an unsubstituted or substituted monovalent hydrocarbon group containing 1 to 10 carbon atoms, and preferably 1 to 8 carbon atoms, and a is a positive number of 1.5 to 2.8, preferably 1.8 to 2.5, and more preferably 1.95 to 2.05.

Examples of the unsubstituted or substituted monovalent hydrocarbon group bonded to the silicon atom which is represented by R¹ include alkyl groups such as methyl group, ethyl group, propyl group, isopropyl group, butyl group, isobutyl group, tert-butyl group, pentyl group, neopentyl group, hexyl group, cyclohexyl group, octyl group, nonyl group, and decyl group; aryl groups such as phenyl group, tolyl group, xylyl group, and naphthyl group; aralkyl groups such as benzyl group, phenylethyl group, and phenylpropyl group; alkenyl groups such as vinyl group, allyl group, propenyl group, isopropenyl group, butenyl group, hexenyl group, cyclohexenyl group, and octenyl group; and any one of such groups having its hydrogen atoms partly or entirely substituted with a halogen atom such as fluorine, bromine, or chlorine or cyano group such as chloromethyl group, chloropropyl group, bromoethyl group, trifluoro propyl group, and cyanoethyl group. Preferably, 90 mol% or more of the R¹, and in particular, all R¹ other than alkenyl is methyl group.

The organopolysiloxane (A) which is liquid at room temperature may comprise either a single compound or a mixture of two or more compounds, and content of the alkenyl group in the organopolysiloxane in the entire component (A) is preferably 1.0×10⁻⁶ to 5.0×10-⁴ mol/g, and in particular, 1.0×10⁻⁵ to 2.0×10⁻⁴ mol/g. When the amount of the alkenyl group is below such range, rubber hardness will be insufficient, and the composition may become a gel. When the amount of the alkenyl group is in excess of such range, crosslinking density will be too high, and the rubber will have an unduly high hardness. The alkenyl group may be bonded either to the silicon atom at the terminal of the molecular chain and/or the silicon atom in the midst of the molecular chain.

The organopolysiloxane (A) which is liquid at room temperature basically has a straight chain structure in which both ends of the molecular chain are end capped with a triorganosiloxy group and the backbone comprises a repetition of the diorganosiloxane unit. However, it may partly have a branched or cyclic structure.

With regard to the molecular weight, the organopolysiloxane (A) which is liquid at room temperature has an average degree of polymerization in terms of polystyrene measured by gel permeation chromatography (GPC) (this also applies to the following description) of up to 1500, preferably 100 to 1500, and more preferably 150 to 1000. When the average degree of polymerization is less than 100, sufficient rubber texture is not obtained whereas the average degree of polymerization in excess of 1500 will result in an unduly high viscosity, and the molding will be difficult.

The organopolysiloxane (B) of the present invention is an organopolysiloxane which is in the state like a raw rubber at room temperature without exhibiting flowability by its own weight. The organopolysiloxane (B) has at least 6, preferably at least 8, more preferably at least 10 (such as 10 to 200), and most preferably 10 to 100 alkenyl groups bonded to the silicon atom in one molecule. When the number of the alkenyl groups bonded to the silicon atom in the organopolysiloxane (B) is less than 6, rubber strength will be insufficient. The alkenyl group is preferably the one containing 2 to 8 carbon atoms, and more preferably 2 to 6 carbon atoms, and most preferably, the alkenyl group is vinyl group.

The organopolysiloxane (B) which is in the state like a raw rubber at room temperature may be the one having the following average compositional formula (II):

R²_{b}SiO_{(4-b)/2} (II)

wherein R² is independently an unsubstituted or substituted monovalent hydrocarbon group containing 1 to 10, and preferably 1 to 8 carbon atoms, and b is a positive number of 1.8 to 2.5, preferably 1.9 to 2.1, more preferably 1.95 to 2.02, and most preferably 1.98 to 2.01.

Examples of the unsubstituted or substituted monovalent hydrocarbon group bonded to the silicon atom which is represented by R² include those mentioned above for R¹, namely, alkyl groups such as methyl group, ethyl group, propyl group, isopropyl group, butyl group, isobutyl group, tert-butyl group, pentyl group, neopentyl group, hexyl group, cyclohexyl group, octyl group, nonyl group, and decyl group; aryl groups such as phenyl group, tolyl group, xylyl group, and naphthyl group; aralkyl groups such as benzyl group, phenylethyl group, and phenylpropyl group; alkenyl groups such as vinyl group, allyl group, propenyl group, isopropenyl group, butenyl group, hexenyl group, cyclohexenyl group, and octenyl group; and any one of such groups having its hydrogen atoms partly or entirely substituted with a halogen atom such as fluorine, bromine, or chlorine or cyano group such as chloromethyl group, chloropropyl group, bromoethyl group, trifluoro propyl group, and cyanoethyl group. Preferably, 90 mol% or more of the R², and in particular, all R² other than alkenyl is methyl group.

The organopolysiloxane (B) which is in the state like a raw rubber at room temperature may comprise either a single compound or a mixture of two or more compounds, and content of the alkenyl group in the organopolysiloxane in the entire component (A) is preferably 0.000015 to 0.0005 mol/g, and in particular, 0.00002 to 0.0002 mol/g. When the amount of the alkenyl group is in excess of such range, the composition may have an unduly high rubber strength, and the rubber may become brittle. When the amount of the alkenyl group is below such range, rubber may have an insufficient hardness. The alkenyl group may be bonded either to the silicon atom at the terminal of the molecular chain and/or the silicon atom in the midst of the molecular chain.

As in the case of the organopolysiloxane (A) which is liquid at room temperature, the organopolysiloxane (B) which is in the state like a raw rubber at room temperature basically has a straight chain structure in which both ends of the molecular chain are end capped with a triorganosiloxy group and the backbone comprises a repetition of the diorganosiloxane unit. However, it may partly have a branched or cyclic structure.

The organopolysiloxane (B) is an organopolysiloxane (B) which is in the state like a raw rubber at room temperature, and the molecular weight is such that the average degree of polymerization is at least 2000, and preferably at least 3000. When the average degree of polymerization is less than 2000, sufficient rubber texture is not obtained and the surface may become tacky. The average degree of polymerization is typically up to 100,000, and more preferably up to 80,000.

The organopolysiloxane (A) which is liquid at room temperature and the organopolysiloxane (B) which is in the state like a raw rubber at room temperature are preferably incorporated such that the component (A) constitutes 50 to 97 parts by weight and the component (B) constitutes 3 to 50 parts by weight; more preferably such that the component (A) constitutes 60 to 95 parts by weight and the component (B) constitutes 5 to 40 parts by weight; and even more preferably such that the component (A) constitutes 70 to 90 parts by weight and the component (B) constitutes 10 to 30 parts by weight in relation to 100 parts by weight of the total of the component (A) and the component (B). Excessively low content of the component (B) in relation to the component (A) will result in the failure of obtaining the desired material having a high viscosity, whereas excessively high content of the component (B) in relation to the component (A) will result in an excessively high viscosity, and in such a case, the molding will be difficult.

Component (C) is an organohydrogenpolysiloxane containing at least 2, preferably at least 3 (for example, 3 to 200), more preferably 3 to 100, and most preferably 4 to 50 hydrogen atoms which are bonded to the silicon atom (SiH group) per molecule. Component (C) may also be a mixture of such organohydrogenpolysiloxane. The SiH group in the molecule acts as a curing agent in the curing of the composition by crosslinking with the alkenyl group bonded to the silicon atom in the components (A) and (B) by hydrosilyl addition reaction.

The organohydrogenpolysiloxane (C) may be the one having the following chemical composition (III):

R³_{C}H_{d}SiO_{(4-c-d)/2} (III)

wherein R³ independently represents an unsubstituted or substituted monovalent hydrocarbon group containing 1 to 10 carbon atoms, and preferably 1 to 8 carbon atoms, c is a positive number of 0.7 to 2.1, d is a positive number of 0.001 to 1.0, and c+d is a positive number of 0.8 to 3.0.

Examples of the monovalent hydrocarbon group R³ are the same as those as mentioned above for the R¹ of formula (I). R³, however, is preferably the one having no aliphatic unsaturated group. c is preferably 0.8 to 2.0, d is preferably 0.01 to 1.0, and c+d is preferably 1.0 to 2.5.

The organohydrogenpolysiloxane (C) may have a molecular structure which is any one of straight chain, cyclic, branched, or three dimensional network structures. In this case, the organohydrogenpolysiloxane (C) may be the one which is liquid at room temperature having the number of silicon atoms in one molecule (or the degree of polymerization) of preferably about 2 to 300, more preferably about 3 to 200, and most preferably about 4 to 150. The hydrogen atom bonded to the silicon atom may be located either at one end, in the intermediate position, or at both ends of the molecular chain.

Examples of the organohydrogenpolysiloxane (C) include 1,1,3,3-tetramethyldisiloxane, 1,3,5,7-tetramethylcyclotetrasiloxane, methylhydrogensiloxane cyclic polymer, methylhydrogensiloxane-dimethylsiloxane cyclic copolymer, tris(dimetyhydrogensiloxy)methylsilane, tris(dimethylhydrogensiloxy)phenylsilane, methylhydrogenpolysiloxane which is terminated at both ends with trimethylsiloxy group, dimethylsiloxane-methylhydrogensiloxane copolymer which is terminated at both ends with trimethylsiloxy group, dimethylpolysiloxane which is terminated at both ends with dimethylhydrogensiloxy group, dimethylsiloxane-methylhydrogensiloxane copolymer which is terminated at both ends with dimethylhydrogensiloxy group, methylhydrogensiloxane-diphenylsiloxane copolymer which is terminated at both ends with trimethylsiloxy group, methylhydrogensiloxane-diphenylsiloxane-dimethylsiloxane copolymer which is terminated at both ends with trimethylsiloxy group,
a copolymer comprising (CH)₂HSiO_{1/2} unit and SiO_{4/2} unit, and a copolymer comprising (CH₃)₂HSiO_{1/2} unit and SiO_{4/2} unit and (C₆H₅)₃SiO_{1/2} unit.

The organohydrogenpolysiloxane (C) is incorporated at an amount of 0.2 to 20 parts by weight, and in particular, at 0.3 to 10 parts by weight in relation to 100 parts by weight of the total content of the component (A) and the component (B), and in this case, the molar ratio of the hydrogen atoms bonded to the silicon atom of the organopolysiloxane (i.e., SiH group) to the total amount of the alkenyl group bonded to the silicon atoms in the component (A) and the component (B) is preferably in the range of 0.8 to 10.0, and in particular 1.0 to 5.0. When this ratio is below such range, crosslinking may become insufficient and the rubber may exhibit tackiness. In the case of the ratio exceeding such range, the molded article may suffer from air bubble entrapment or mold release difficulty.

The precipitated silica (D) is also called wet silica, and this precipitated silica is critical for imparting sufficient strength with a silicone rubber. In the present invention, the precipitated silica used is the one produced by BET method having a specific surface area of at least 100 m²/g (for example 100 to 300 m²/g), preferably 120 to 250 m²/g, and more preferably 150 to 220 m²/g. Sufficient strength is not realized when the specific surface area is less than 100 m²/g.

In addition, the precipitated silica (D) is preferably the one having a DBP absorption of 100 to 250 ml/100 g, and more preferably 150 to 220 ml/100 g. Sufficient strength may not be realized when the DBP absorption is below such range, whereas the DBP absorption in excess of such range may result in considerably poor compression set.

The precipitated silica may be used with no further treatment. However, the precipitated silica is preferably used by preliminarily treating with a hydrophobicizing agent, or by also adding a surface treating agent in the kneading with the silicone oil. Exemplary surface treating agents includes those known in the art such as an alkylalkoxysilane, an alkylchlorosilane, an alkylsilazane, a silane coupling agent, or a titanate treating agent, or a fatty acid ester, which may be used alone or in combination of two ore more incorporated either simultaneously or at different timings.

The precipitated silica (D) may be incorporated at an amount of 10 to 40 parts by weight, and preferably at 15 to 35 parts by weight in relation to 100 parts by weight of the total of the component (A) and the component (B). Incorporation at an amount less than 10 parts by weight results in the insufficient strength, whereas incorporation in excess of 40 parts by weight results in the increased compression set.

Fumed silica may also be added with the precipitated silica (D). When added, it should be added at an amount that does not adversely affect the compression set, for example, at an amount not exceeding the precipitated silica, and preferably at an amount 3/2 or less, and more preferably at an amount 1/2 or less compared to the precipitated silica. In addition, when fumed silica is added, total amount of the precipitated silica and the fumed silica is preferably adjusted to the range of up to 50 parts by weight in relation to 100 parts by weight of the total of the component (A) and the component (B).

The catalyst (E) used for the addition reaction (namely, the catalyst for the hydrosilylation addition reaction) may be platinum black, platinic chloride, chloroplatinic acid, reaction product of chloroplatinic acid and a monohydric alcohol, complex of chloroplatinic acid and an olefin, a platinum catalyst such as platinum bisacetoacetate, palladium catalyst, and rhodium catalyst. The catalyst for the addition reaction may be used at the so called catalytic amount, and the amount is typically about 0.5 to 1,000 ppm, and in particular, about 1 to 500 ppm in terms of the weight of the platinum group element in relation to the total weight of the components (A) and (B).

In addition to the components as described above, the composition may optionally contain a filler such as quartz powder, diatomaceous earth, calcium carbonate, or aluminum oxide; an electroconductive agent such as carbon black, electroconductive zinc oxide, or metal powder; a hydrosilylation inhibitor such as a nitrogen-containing compound or acetylene compound, phosphorus compound, nitryl compound, carboxylate, tin compound, mercury compound, or sulfur compound; a heat resistant agent such as iron oxide, titanium oxide, or cerium oxide; a internal mold release agent such as dimethyl silicone oil, tackifier, thixotropic agent.

The silicone rubber composition of the present invention can be produced by mixing the components as described above. However, the viscosity at 25°C and a shear speed of 10 s⁻¹ should be 100 to 800 Pa·s, and this viscosity is more preferably 150 to 600 Pa·s, and in particular, 200 to 500 Pa·s. When the viscosity at 25°C and a shear speed of 10 s⁻¹ is less than 100 Pa·s, the composition used in the molding is likely to suffer from air entrapment resulting in voids in the molded article, and the excessively high flowability is likely to invite flash formation. When the viscosity is in excess of 800 Pa·s, the viscosity is too high for the introduction of the material in the mold. The viscosity can be measured, for example, by a rotational viscometer.

The composition is not limited for its cure speed, and the cure speed may range from the one curing at room temperature to the one curing at an elevated temperature. However, the cure speed is preferably such that, when the 10% cure time as measured by MDR (Moving Die Rheometer) (or rotorless) type rheometer is designated T10 (second), and 90% cure time is designated T90 (second), 15 seconds s T10 ≤ 60 seconds, and 5 seconds s (T90-T10) ≤ 30 seconds; and more preferably, 20 seconds s T10 s 50 seconds, and 5 seconds s (T90-T10) ≤ 25 seconds. When T10 is below such range, the composition may suffer from problems such as scorching, whereas T10 in excess of such range may result in the delay of curing and invite economical disadvantage. When (T90-T10) is below such range, filling of the composition in the cavity may become difficult, whereas (T90-T10) in excess of such range may result in the difficulty of using the composition for burr-free molding. The silicone rubber composition having such cure speed is particularly suitable for the injection molding using the liquid silicone rubber composition.

The silicone rubber composition of the present invention may be molded and cured by a method commonly used in the art, and the preferred is use of liquid injection molding. The conditions used for curing (primary curing) may be heating to a temperature of 100 to 220°C for about 5 seconds to 30 minutes, and preferably 120 to 200°C for about 10 seconds to 15 minutes. The conditions used for secondary curing (post curing) may be heating to a temperature of 150 to 220°C, and in particular, 180 to 200°C for about 0.5 to 12 hours, and in particular, for about 1 to 6 hours.

The silicone rubber composition of the present invention is capable of producing a cured silicone having a tensile strength of at least 4.0 MPa, and in particular, at least 5.0 MPa simultaneously with an elongation at break of at least 200%, and in particular, at least 250% by curing under the condition such as 100 to 220°C for 5 seconds to 30 minutes. Tensile strength of less than 4.0 MPa or elongation at break of less than 200% may result in the problems such as tearing of the silicone rubber during the mold release.

### EXAMPLES

Next, the present invention is described in further detail by the following Examples and the Comparative Examples, which by no means limit the scope of the present invention. In the following Examples, "part" means "part by weight" and "average degree of polymerization" is the weight average degree of polymerization in terms of polystyrene as measured by gel permeation chromatography (GPC).

### Example 1

60 parts of dimethylpolysiloxane (1) which is terminated at both ends with dimethylvinylsiloxy group having an average degree of polymerization of 500 [content of the vinyl group, 0.000054 mol/g], 40 parts of precipitated silica (Nipsil LP manufactured by Nippon Silica) having a specific surface area of 200 m²/g with DBP absorption of 190 ml/100 g, 5 parts of hexamethyldisilazane, and 1.0 part of water were stirred at room temperature for 30 minutes, and the mixture was heated to 150°C, and the stirring was continued for 3 hours. After cooling, 15 parts of dimethylpolysiloxane (1) and 10 parts of dimethylpolysiloxane (2) which is terminated at both ends with trimethylsiloxy group and which has vinyl group in the side chain with the average degree of polymerization of 200 [content of the vinyl group, 0.00052 mol/g] were added to the mixture, and the stirring was continued for 30 minutes to obtain the silicone rubber base.

To the thus obtained silicone rubber base was added 15 parts of raw rubber-like dimethylpolysiloxane (3) having 20 vinyl groups on average in the molecule with the average degree of polymerization of 6000 [content of the vinyl group, 0.000045 mol/g], and the stirring was continued for 30 minutes. Next, 3.0 parts [corresponding to SiH group/alkenyl group of 1.5 (mol/mol)] of methylhydrogenpolysiloxane (4) having SiH group on both ends and in the side chain (degree of polymerization, 17; content of the SiH group, 0.0050 mol/g) as a crosslinking agent; and 0.07 parts of ethynylcyclohexanol as a reaction regulating agent were added, and the stirring was continued for 15 minutes to obtain a silicone rubber composition having a viscosity at 25°C at a shear speed of 10 s⁻¹ of 201 Pa·s and a viscosity at the shear speed of 0.9 s⁻¹ of 496 Pa·s as measured by Rotovisco RV1 (a precision rotational viscometer manufactured by EKO Instruments Co., Ltd.) [the viscosity was measured by the same procedure in the following Examples].

To 100 parts of this silicone rubber composition was added 0.1 part of platinum catalyst (Pt concentration, 1% by weight). The mixture was press cured at 120°C/10 minutes, and post cured in an oven at 200°C for 4 hours to obtain cured silicone rubber. This cured product was evaluated for its hardness, tensile strength, elongation at break, and compression set [25% compression at 150°C x 22 hours] according to JIS K 6249. The results are shown in Table 1.

### Example 2

60 parts of dimethylpolysiloxane (5) which is terminated at both ends with dimethylvinylsiloxy group having an average degree of polymerization of 300 [content of the vinyl group, 0.000089 mol/g], 20 parts of raw rubber-like dimethylpolysiloxane (6) having 100 vinyl groups on average in the molecule with the average degree of polymerization of 7000 [content of the vinyl group, 0.00019 mol/g], and 25 parts of precipitated silica having hydrophobicized surface (Nipsil SS-30P manufactured by Nippon Silica) having a specific surface area of 125 m²/g with DBP absorption of 170 ml/100 g were stirred at room temperature for 30 minutes, and the mixture was heated to 150°C, and the stirring was continued for 3 hours. The mixture was cooled to obtain the silicone rubber base.

To the thus obtained silicone rubber base was added 20 parts of dimethylpolysiloxane (1) of Example 1, and the stirring was continued for 30 minutes. Next, 4.1 parts [corresponding to SiH group/alkenyl group of 2.0 (mol/mol)] of methylhydrogenpolysiloxane (4) of Example 1 (degree of polymerization, 17; content of the SiH group, 0.0050 mol/g) as a crosslinking agent and 0.06 parts of ethynylcyclohexanol as a reaction regulating agent were added, and the stirring was continued for 15 minutes to obtain a silicone rubber composition having a viscosity at 25°C at a shear speed of 10 s⁻¹ of 156 Pa·s and a viscosity at the shear speed of 0.9 s⁻¹ of 385 Pa·s.

To 100 parts of this silicone rubber composition was added 0.1 part of platinum catalyst (Pt concentration, 1% by weight). The mixture was press cured at 120°C/10 minutes, and post cured in an oven at 200°C for 4 hours to obtain cured silicone rubber. This cured product was evaluated for its hardness, tensile strength, elongation at break, and compression set [25% compression at 150°C × 22 hours] according to JIS K 6249. The results are shown in Table 1.

### Example 3

60 parts of dimethylpolysiloxane (1) of Example 1, 35 parts of precipitated silica (Tokusil USA manufactured by Tokuyama Corporation) having a specific surface area of 210 m²/g and a DBP absorption of 200 ml/100 g, 10 parts of fumed silica (Aerosil 300 manufactured by Nippon Aerosil Co., Ltd.) having a specific surface area of 300 m²/g, 8 parts of hexamethyldisilazane, and 1.0 parts of water were mixed at room temperature, and the mixture was stirred for 30 minutes. The mixture was then heated to 150°C, and the stirring was continued for 3 hours. After cooling, 20 parts of methyl polysiloxane (2) of Example 1 was added, and the stirring was continued for 30 minutes to obtain the silicone rubber base.

To the thus obtained silicone rubber base were added 10 parts of dimethylpolysiloxane (1) and 10 parts of raw rubber-like dimethylpolysiloxane (7) having 10 vinyl groups on average in the molecule with the average degree of polymerization of 5000 [content of the vinyl group, 0.000027 mol/g], and the stirring was continued for 30 minutes. Next, 3.9 parts [corresponding to SiH group/alkenyl group of 2.5 (mol/mol)] of methylhydrogenpolysiloxane (8) having SiH group only in the side chain (degree of polymerization, 30; content of the SiH group, 0.0072 mol/g) as a crosslinking agent, and 0.07 parts of ethynylcyclohexanol as a reaction regulating agent were added, and the stirring was continued for 15 minutes to obtain a silicone rubber composition having a viscosity at 25°C at a shear speed of 10 s⁻¹ of 516 Pa·s and a viscosity at the shear speed of 0.9 s⁻¹ of 2250 Pa·s.

To 100 parts of this silicone rubber composition was added 0.1 part of platinum catalyst (Pt concentration, 1% by weight). The mixture was press cured at 120°C/10 minutes, and post cured in an oven at 200°C for 4 hours to obtain cured silicone rubber. This cured product was evaluated for its hardness, tensile strength, elongation at break, and compression set [25% compression at 150°C x 22 hours] according to JIS K 6249. The results are shown in Table 1.

### Comparative Example 1

80 parts of dimethylpolysiloxane (5) of Example 2 and 25 parts of precipitated silica having hydrophobicized surface (Nipsil SS-30P manufactured by Nippon Silica) having a specific surface area of 125 m²/g with a DBP absorption of 170 ml/100 g were stirred at room temperature for 30 minutes, and the mixture was heated to 150°C, and the stirring was continued for 3 hours. The mixture was cooled to obtain the silicone rubber base.

To the thus obtained silicone rubber base was added 20 parts of dimethylpolysiloxane (1) of Example 1, and the stirring was continued for 30 minutes. Next, 3.3 parts [corresponding to SiH group/alkenyl group of 2.0 (mol/mol)] of methylhydrogenpolysiloxane (4) of Example 1 as a crosslinking agent and 0.06 parts of ethynylcyclohexanol as a reaction regulating agent were added, and the stirring was continued for 15 minutes to obtain a silicone rubber composition having a viscosity at 25°C at a shear speed of 10 s⁻¹ of 41 Pa·s and a viscosity at the shear speed of 0.9 s⁻¹ of 98 Pa·s.

To 100 parts of this silicone rubber composition was added 0.1 part of platinum catalyst (Pt concentration, 1% by weight). The mixture was press cured at 120°C/10 minutes, and post cured in an oven at 200°C for 4 hours to obtain cured silicone rubber. This cured product was evaluated for its hardness, tensile strength, elongation at break, and compression set [25% compression at 150°C x 22 hours] according to JIS K 6249. The results are shown in Table 1.

### Comparative Example 2

60 parts of dimethylpolysiloxane (5) of Example 2, 20 parts of raw rubber-like dimethylpolysiloxane (6) of Example 2, and 25 parts of precipitated silica having hydrophobicized surface (Nipsil SS-70 manufactured by Nippon Silica) having a specific surface area of 42 m²/g with a DBP absorption of 140 ml/100 g were stirred at room temperature for 30 minutes, and the mixture was heated to 150°C, and the stirring was continued for 3 hours. The mixture was cooled to obtain the silicone rubber base.

To the thus obtained silicone rubber base was added 20 parts of dimethylpolysiloxane (1) of Example 1, and the stirring was continued for 30 minutes. Next, 4.1 parts [corresponding to SiH group/alkenyl group of 2.0 (mol/mol)] of methylhydrogenpolysiloxane (4) of Example 1 as a crosslinking agent and 0.06 parts of ethynylcyclohexanol as a reaction regulating agent were added, and the stirring was continued for 15 minutes to obtain a silicone rubber composition having a viscosity at 25°C at a shear speed of 10 s⁻¹ of 133 Pa·s and a viscosity at the shear speed of 0.9 s⁻¹ of 321 Pa·s.

To 100 parts of this silicone rubber composition was added 0.1 part of platinum catalyst (Pt concentration, 1% by weight). The mixture was press cured at 120°C/10 minutes, and post cured in an oven at 200°C for 4 hours to obtain cured silicone rubber. This cured product was evaluated for its hardness, tensile strength, elongation at break, and compression set [25% compression at 150°C x 22 hours] according to JIS K 6249. The results are shown in Table 1.

### Comparative Example 3

60 parts of dimethylpolysiloxane (5) of Example 2, 20 parts of raw rubber-like dimethylpolysiloxane (8) having 3 vinyl groups on average in the molecule with the average degree of polymerization of 7000 [content of the vinyl group, 0.0000058 mol/g], and 25 parts of precipitated silica having hydrophobicized surface (Nipsil SS-30P manufactured by Nippon Silica) having a specific surface area of 125 m²/g with a DBP absorption of 170 ml/100 g were stirred at room temperature for 30 minutes, and the mixture was heated to 150°C, and the stirring was continued for 3 hours. The mixture was cooled to obtain the silicone rubber base.

To the thus obtained silicone rubber base was added 20 parts of dimethylpolysiloxane (1) of Example 1, and the stirring was continued for 30 minutes. Next, 2.6 parts [corresponding to SiH group/alkenyl group of 2.0 (mol/mol)] of methylhydrogenpolysiloxane (4) of Example 1 as a crosslinking agent and 0.06 parts of ethynylcyclohexanol as a reaction regulating agent were added, and the stirring was continued for 15 minutes to obtain a silicone rubber composition having a viscosity at 25°C at a shear speed of 10 s⁻¹ of 152 Pa·s and a viscosity at the shear speed of 0.9 s⁻¹ of 380 Pa·s.

To 100 parts of this silicone rubber composition was added 0.1 part of platinum catalyst (Pt concentration, 1% by weight). The mixture was press cured at 120°C/10 minutes, and post cured in an oven at 200°C for 4 hours to obtain cured silicone rubber. This cured product was evaluated for its hardness, tensile strength, elongation at break, and compression set [25% compression at 150°C x 22 hours] according to JIS K 6249. The results are shown in Table 1.

Next, the compositions of the Examples and the Comparative Examples were measured for their cure speed by using rotorless curemeter MDR 2000 (manufactured by Alpha Technologies). The measurement was conducted at a temperature of 150°C for a time of up to 3 minutes. The results are shown in Table 1.

**Table 1**

| | Example | | | Comparative Example | | |
|---|---|---|---|---|---|---|
| | 1 | 2 | 3 | 1 | 2 | 3 |
| Hardness (Durometer A) | 41 | 48 | 58 | 34 | 37 | 30 |
| Tensile strength (MPa) | 6.2 | 5.2 | 8.5 | 5.5 | 3.9 | 3.4 |
| Elongation at break (%) | 450 | 320 | 360 | 410 | 330 | 400 |
| Compression set (%) [150°C × 22 h] | 6 | 5 | 7 | 5 | 5 | 9 |
| T10/T90 (sec) | 28/45 | 30/39 | 29/36 | 28/37 | 29/40 | 29/40 |

The compositions of the Examples and the Comparative Examples were also evaluated by the injection molding test as described below.

### <Molding conditions>

| | |
|---|---|
| Mold: | cap shape, 2 cavities/mold, cold runner, fully automated |
| Mold temperature: | 150°C |
| Injection speed: | 30 cc/s |
| Injection pressure: | 800 bar |
| Volume: | 7.7 cc |
| Injection time: | 0.35 seconds |
| Curing time: | 20 seconds |
| Mold release: | 0.15 MPa (air pressure of the ejector pin) |

Measurement (100 shot) was carried out for each material after fully substituting the mold with the material.

### <Test results>

In Examples 1 to 3, 100 shots (200 pieces) could be molded and released from the mold without any problem. In Comparative Example 1, flash was formed almost in every sample, and air bubbles were found in 35 samples. In Comparative Example 2, rubber was torn during the release of the molded article from the mold in 29 shots out of 100 shots. In Comparative Example 3, rubber was torn during the release from the mold in 14 shots out of 100 shots.

## Claims

1. An addition curable silicone rubber composition comprising
(A) 50 to 97 parts by weight of an organopolysiloxane which is liquid at room temperature, wherein the organopolysiloxane contains at least two alkenyl groups bonded to silicon atom per molecule and has an average degree of polymerization of up to 1000;
(B) 3 to 50 parts by weight of an organopolysiloxane which has at least 6 alkenyl groups bonded to silicon atom, which has an average degree of polymerization of at least 2000, and which is in the state of raw rubber at room temperature;
(C) 0.2 to 20 parts by weight per 100 parts by weight of total of the components (A) and (B) of an organohydrogenpolysiloxane containing at least two hydrogen atoms which are bonded to silicon atom per molecule;
(D) 10 to 40 parts by weight per 100 parts by weight of total of the components (A) and (B) of precipitated silica having a specific surface area as measured by BET method of at least 100 m²/g; and
(E) a catalytic amount of a catalyst for addition reaction;
said addition curable silicone rubber composition having a viscosity at 25°C at a shear speed of 10 s⁻¹ of 100 to 800 Pa·s.

2. An addition curable silicone rubber composition according claim 1 wherein, when 10% cure time at 130°C is T10 (second) and 90% cure time is T90 (second), T10 and T90 are such that:
15 seconds ≤ T10 s 60 seconds, and
5 seconds s (T90-T10) ≤ 30 seconds.

3. An addition curable silicone rubber composition according claim 1 or 2 wherein the organopolysiloxane (B) which is liquid at room temperature has content of the alkenyl group of 0.000015 to 0.0005 mol/g.

4. An addition curable silicone rubber composition according to any one of claim 1 to 3 wherein the precipitated silica (D) has a DBP absorption of 100 to 250 ml per 100 g.

5. A cured silicone rubber produced by curing the addition curable silicone rubber composition of any one of claims 1 to 4 under the condition of 100 to 220°C for 5 seconds to 30 minutes, said cured silicone rubber having a tensile strength of at least 4.0 MPa, and an elongation at break of at least 200%.

## Patentansprüche

1. Additionshärtbare Silicon-Kautschuk-Zusammensetzung, umfassend
(A) 50 bis 97 Gewichtsteile eines Organopolysiloxans, das bei Raumtemperatur flüssig ist, wobei das Organopolysiloxan mindestens zwei an Siliciumatom gebundene Alkenylgruppen pro Molekül enthält und einen durchschnittlichen Polymerisationsgrad von bis zu 1.000 besitzt;
(B) 3 bis 50 Gewichtsteile eines Organopolysiloxans, das mindestens 6 an Siliciumatom gebundene Alkenylgruppen besitzt, das einen durchschnittlichen Polymerisationsgrad von mindestens 2.000 aufweist und das bei Raumtemperatur in einem Zustand von Rohkautschuk ist;
(C) 0,2 bis 20 Gewichtsteile pro 100 Gewichtsteile der Gesamtmenge der Komponenten (A) und (B) eines Organohydrogenpolysiloxans, das mindestens zwei an Siliciumatom gebundene Wasserstoffatome pro Molekül enthält;
(D) 10 bis 40 Gewichtsteile pro 100 Gewichtsteile der Gesamtmenge der Komponenten (A) und (B) ausgefälltes Silica mit einer spezifischen Oberfläche, gemessen durch BET-Methode, von mindestens 100 m²/g; und
(E) eine katalytische Menge eines Katalysators für Additionsreaktion;
wobei die additionshärtbare Silicon-Kautschuk-Zusammensetung eine Viskosität bei 25°C bei einer Schergeschwindigkeit von 10 s⁻¹ von 100 bis 800 Pa·s besitzt.

2. Additionshärtbare Silicon-Kautschuk-Zusammensetzung nach Anspruch 1, wobei, wenn 10% Härtezeit bei 130°C T10 (Sekunden) und 90% Härtezeit T90 (Sekunden) sind, T10 und T90 so sind, dass
15 Sekunden ≤ T10 ≤ 60 Sekunden, und
5 Sekunden ≤ (T90-T10) ≤ 30 Sekunden.

3. Additionshärtbare Silicon-Kautschuk-Zusammensetzung nach Anspruch 1 oder 2, wobei das Organopolysiloxan (B), das bei Raumtemperatur flüssig ist, einen Gehalt der Alkenylgruppen von 0,000015 bis 0,0005 Mol/g besitzt.

4. Additionshärtbare Silicon-Kautschuk-Zusammensetzung gemäß mindestens einem der Ansprüche 1 bis 3, wobei das ausgefällte Silica (D) eine DBP-Absorption von 100 bis 250 ml pro 100 g besitzt.

5. Gehärteter Silicon-Kautschuk, hergestellt durch Härten der additionshärtbaren Silicon-Kautschuk-Zusammensetzung gemäß mindestens einem der Ansprüche 1 bis 4 unter der Bedingung von 100 bis 220°C während 5 Sekunden bis 30 Minuten, wobei der gehärtete Silicon-Kautschuk eine Zugfestigkeit von mindestens 4,0 MPa und eine Reißdehnung von mindestens 200% besitzt.

## Revendications

1. Composition de caoutchouc de silicone durcissable par addition comprenant
(A) de 50 à 97 parties en masse d'un organopolysiloxane qui est liquide à température ambiante, dans laquelle l'organopolysiloxane contient au moins deux groupes alcényles liés à l'atome de silicone par molécule et a un degré moyen de polymérisation pouvant atteindre 1 000 ;
(B) de 3 à 50 parties en masse d'un organopolysiloxane qui a au moins 6 groupes alcényles liés à l'atome de silicone, qui a un degré moyen de polymérisation d'au moins 2 000, et qui est à l'état de caoutchouc brut à température ambiante ;
(C) de 0,2 à 70 parties en masse pour 100 parties en masse du total des composants (A) et (B) d'un organohydrogénopolysiloxane contenant au moins deux atomes d'hydrogène qui sont liés à l'atome de silicone par molécule ;
(D) de 10 à 40 parties en masse pour 100 parties en masse du total des composants (A) et (B) de silice précipitée ayant une surface spécifique telle que mesurée par la méthode BET d'au moins 100 m²/g ; et
(E) une quantité catalytique d'un catalyseur pour la réaction d'addition ;
ladite composition de caoutchouc de silicone durcissable par addition ayant une viscosité à 25 °C à une vitesse de cisaillement de 10 s⁻¹ de 100 à 800 Pa·s.

2. Composition de caoutchouc de silicone durcissable par addition selon la revendication 1, dans laquelle, lorsque 10 % de la durée de durcissement à 130°C est T10 (secondes) et 90 % de la durée de durcissement est T90 (secondes), T10 et T90 sont telles que :
15 secondes ≤ T10 ≤ 60 secondes, et
5 secondes ≤ (T90 - T10) ≤ 30 secondes.

3. Composition de caoutchouc de silicone durcissable par addition selon la revendication 1 ou 2, dans laquelle l'organohydrogénopolysiloxane (B) qui est liquide à température ambiante a une teneur en groupe alcényle de 0,000015 à 0,0005 mol/g.

4. Composition de caoutchouc de silicone durcissable par addition selon l'une quelconque des revendications 1 à 3, dans laquelle la silice précipitée (D) a une absorption DPB de 100 à 250 ml pour 100 g.

5. Caoutchouc de silicone durci produit par durcissement de la composition de caoutchouc de silicone durcissable par addition de l'une quelconque des revendications 1 à 4 sous la condition de 100 à 220 °C pendant 5 secondes à 30 minutes, ledit caoutchouc de silicone durci ayant une résistance à la traction d'au moins 4,0 MPa, et un allongement à la rupture d'au moins 200 %.
